# EUROPÄISCHE PATENTSCHRIFT

(11) **EP 2 167 355 B1**
(45) Veröffentlichungstag und Bekanntmachung des Hinweises auf die Patenterteilung: **13.07.2011**
(21) Anmeldenummer: 08760050.8
(22) Anmeldetag: 27.05.2008
(51) Int. Cl.: B60T 7/12, B60T 8/40

(54) **VERFAHREN ZUM STEUERN UND/ODER REGELN EINES ANFAHR- ODER RANGIERVORGANGES BEI EINEM AUTOMATISIERTEN GETRIEBE**
METHOD FOR CONTROLLING AND/OR REGULATING A STARTING OR MANEUVERING PROCESS IN AN AUTOMATIC TRANSMISSION
PROCÉDÉ DE COMMANDE ET/OU DE RÉGULATION D'UN PROCESSUS DE DÉMARRAGE OU DE MANOEUVRE POUR UNE BOÎTE DE VITESSES AUTOMATIQUE

(30) Priorität: 16.06.2007 DE 102007027770
(43) Veröffentlichungstag der Anmeldung: 31.03.2010
(73) Patentinhaber: ZF Friedrichshafen AG, 88038 Friedrichshafen (DE)
(72) Erfinder: PETZOLD, Rainer, 88045 Friedrichshafen (DE); STEINBORN, Mario, 88046 Friedrichshafen (DE)
(86) Internationale Anmeldenummer: PCT/EP2008/056452
(87) Internationale Veröffentlichungsnummer: WO 2008/155194

(56) Entgegenhaltungen:
- DE-A1- 10 135 744
- DE-A1- 19 949 203

## Beschreibung

Die vorliegende Erfindung betrifft ein Verfahren zum Steuern und/oder Regeln eines Anfahr- oder Rangiervorganges bei einem automatisierten Getriebe gemäß der im Oberbegriff des Patentanspruches 1 näher definierten Art.

Beispielsweise aus der Druckschrift DE 101 35 744 A1 ist eine Vorrichtung und ein Verfahren zum Vermeiden des Rückrollens eines Fahrzeuges bekannt. Bei dem bekannten Verfahren wird durch eine Steuereinrichtung ein Signal erzeugt, das bei einem Stillstand oder nahezu Stillstand des Fahrzeuges eine auf ein Getriebe des Fahrzeuges einwirkende Bremse zusätzlich zu den Bremsen des Fahrzeugbremssystems betätigt. Beim Erkennen einer Fortbewegung des Fahrzeuges reduziert die Steuereinrichtung den Bremsdruck in dem Fahrzeugbremssystem und löst die auf das Getriebe einwirkende Bremse. Dadurch wird eine zusätzliche Absicherung beim Versagen der Fahrzeugbremse realisiert, um ein unbeabsichtigtes Zurückrollen des Fahrzeuges zu vermeiden. Auf diese Weise wird eine Rückrollverhinderung für ein Fahrzeug realisiert. Jedoch kann das bekannte Verfahren keine Ansteuerung eines Anfahr- oder Rangiervorganges ermöglichen.

Die aus der Fahrzeugtechnik bekannten Verfahren zum Anfahren und Rangieren verwenden neben der Anfahrkupplung die Betriebsbremse des Fahrzeuges, um das Rangieren und Anfahren des Fahrzeuges mit dem automatisierten Getriebe zu ermöglichen. Durch die Verwendung der Betriebsbremse kommen in nachteiliger Weise Funktionseinbußen im Betrieb des Fahrzeuges vor.

Der vorliegenden Erfindung liegt die Aufgabe zu Grunde, ein Verfahren zum Steuern und/oder Regeln eines Anfahr- oder Rangiervorganges der eingangs beschriebenen Gattung vorzuschlagen, durch das die Funktionalität im Betrieb des Fahrzeuges erweitert wird.

Die Aufgabe wird erfindungsgemäß durch die Merkmale des Patentanspruches 1 gelöst. Weitere vorteilhafte Ausgestaltungen ergeben sich aus den Unteransprüchen.

Somit wird ein Verfahren zum Steuern und/oder Regeln eines Anfahr- oder Rangiervorganges bei einem automatisierten Getriebe eines Fahrzeuges vorgeschlagen, bei dem ein erforderliches Anfahrmoment von einer Anfahrkupplung und ein erforderliches Bremsmoment von einer Bremseinrichtung aufgebracht wird, wobei das Bremsmoment beim Anfahr- oder Rangiervorgang zumindest teilweise durch wenigstens eine Getriebebremse aufgebracht wird.

Auf diese Weise kann zur Unterstützung des Anfahr- oder Rangiervorganges eine üblicherweise in dem automatisierten Getriebe bereits vorhandene Getriebebremse verwendet werden, um ein erforderliches Bremsmoment aufzubringen. Somit ist bei dem erfindungsgemäßen Verfahren die Verwendung der Betriebsbremse beim Anfahr- oder Rangiervorgang nicht notwendig. Infolgedessen kann die Betriebsbremse in anderen Situationen eingesetzt werden, so dass die Funktionalität erweitert wird.

Bevorzugt kann die typischerweise zur Synchronisierung von Klauenelementen oder dergleichen zum Beispiel bei Hochschaltungen eingesetzte Getriebebremse des automatisierten Getriebes verwendet werden. Es ist jedoch auch möglich, dass z. B. eine zusätzliche Getriebebremse vorgesehen wird.

Dem erfindungsgemäßen Verfahren liegt im wesentlichen die Grundidee zu Grunde, dass das Fahrzeug mit der Getriebebremse in Position gehalten wird und die Anfahrkupplung ein Moment zur Verfügung stellt, welches größer gleich dem benötigten Anfahrmoment und kleiner als das Getriebebremsmoment eingestellt wird, so dass sichergestellt wird, das das Fahrzeug im Stillstand gehalten wird. Zum Anfahren beim Anfahrvorgang oder beim Rangiervorgang kann das Bremsmoment der Getriebebremse reduziert oder auch die Getriebebremse vollständig gelöst werden.

Um den Anfahrvorgang beim Lösen des Bremsmoments zu optimieren, kann gemäß einer nächsten Ausgestaltung der vorliegenden Erfindung vorgesehen sein, dass das Anfahrmoment an der Anfahrkupplung in Abhängigkeit von dem Anfahrwiderstand des Fahrzeuges bestimmt wird. Auf diese Weise wird sichergestellt, dass ein ausreichend hohes Moment zum Anfahren beziehungsweise Rangieren des Fahrzeuges zur Verfügung steht. Das Anfahrmoment kann z. B. in Abhängigkeit von bestimmten Kennlinien ermittelt werden.

Vorzugsweise kann das aufgebrachte Bremsmoment der Getriebebremse während des Anfahrvorganges oder des Rangiervorganges in Abhängigkeit des Fahrerwunsches reduziert werden, um das Fahrzeug in Fahrtrichtung zu bewegen.

Um das bei dem erfindungsgemäßen Verfahren erforderliche Bremsmoment durch die Getriebebremse bereitstellen zu können, kann im Rahmen einer nächsten Weiterbildung vorgesehen sein, dass die Getriebebremse an einer Vorgelegewelle oder an einer Getriebeeingangswelle angeordnet wird. Es sind auch andere Anordnungsmöglichkeiten denkbar, um das erforderliche Bremsmoment erzeugen zu können. Als Getriebebremse kann z. B. eine mit dem Getriebe koppelbare Kupplungs- bzw. Bremseinrichtung oder dergleichen verwendet werden.

Das vorgeschlagene Verfahren zum optimierten Steuern und/oder Regeln des Anfahr- oder Rangiervorganges kann durch Verwenden einer geeigneten Steuereinrichtung durchgeführt werden. Beispielsweise kann diese Steuereinrichtung durch eine entsprechende Logik in das Getriebesteuergerätes des automatisierten Getriebes integriert sein. Es sind auch anderer Ausführungsvarianten denkbar.

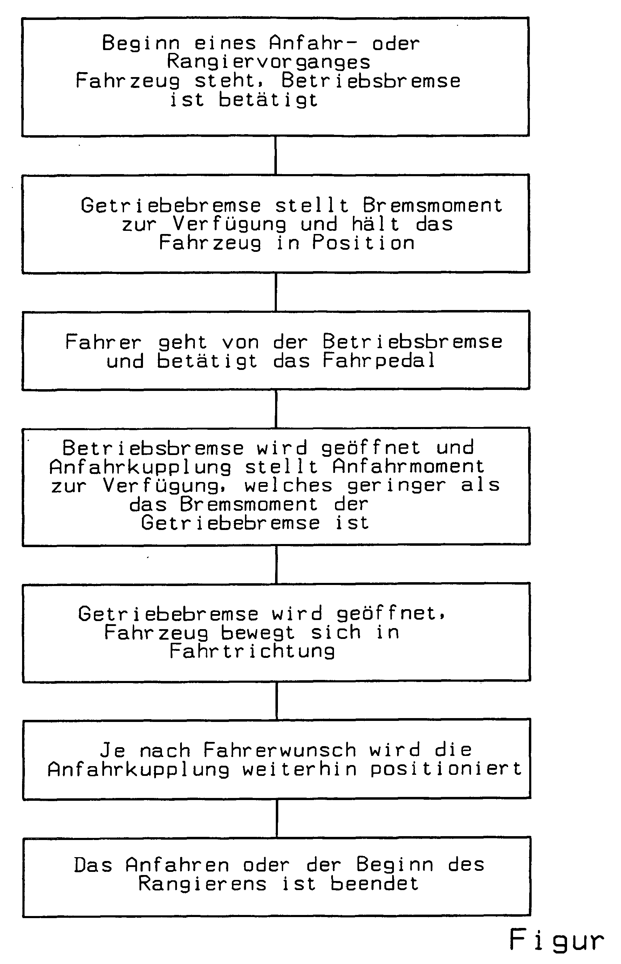

Die vorliegende Erfindung wird anhand der Zeichnung näher erläutert. Die einzige Figur der Erfindung zeigt ein beispielhaftes Ablaufdiagramm einer Ausführungsvariante eines erfindungsgemäßen Verfahrens.

Nachfolgend wird ein beispielhafter Ablauf beim Anfahren beziehungsweise Rangieren gemäß des erfindungsgemäß vorgeschlagenen Verfahrens beschrieben, wobei Überschneidungen und Ergänzungen möglich und auch sinnvoll sein können.

Zu Beginn steht das Fahrzeug mit eingelegtem Anfahr- oder Rangiergang, wobei die Betriebsbremse des Fahrzeuges betätigt ist. Am Anfang des Anfahr- oder Rangiervorganges wird ein erforderliches Bremsmoments durch die Getriebebremse des Fahrzeuges zur Verfügung gestellt, so dass das Fahrzeug an seiner Position gehalten wird.

Sobald der Fahrer die Betriebsbremse nicht mehr betätigt und zudem das Fahrpedal betätigt, wird damit dem System der Anfahr- oder Rangierwunsch mitgeteilt.

Infolgedessen kann durch das erfindungsgemäße Verfahren die Betriebsbremse geöffnet werden und die Anfahrkupplung in eine Position gebracht werden, in der ein ausreichend großes Moment für das Anfahren beziehungsweise Rangieren zur Verfügung gestellt wird. Dieses Anfahrmoment kann in Abhängigkeit von dem jeweiligen Anfahrwiderstand des Fahrzeuges z.B. durch das Getriebesteuergerätes rechnet werden.

Die Getriebebremse hat jedoch ein ausreichend großes Bremsmoments, um das Fahrzeug in Position zu halten. Anschließend kann je nach Fahrerwunsch die Getriebebremse geöffnet werden, um das Fahrzeug in die richtige Fahrtrichtung zu bewegen. Je nach Fahrerwunsch kann die Kupplung weiterhin positioniert werden. Damit ist das Anfahren beziehungsweise der Beginn des Rangierens beendet.

## Patentansprüche

1. Verfahren zum Steuern und/oder Regeln eines Anfahr- oder Rangiervorganges bei einem automatisierten Getriebe eines Fahrzeuges, bei dem ein erforderliches Anfahrmoment von einer Anfahrkupplung und ein erforderliches Bremsmoment von einer Bremseinrichtung aufgebracht wird, **dadurch geken nzeichnet**, dass das Bremsmoment beim Anfahr- oder Rangiervorgang zumindest teilweise durch zumindest eine Getriebebremse aufgebracht wird.

2. Verfahren nach Anspruch 1, **dadurch gekennzeichnet, dass** nach dem Lösen einer Betriebsbremse des Fahrzeuges das erforderliche Bremsmoment bei aktiviertem Anfahr- oder Rangiervorgang vollständig durch die Getriebebremse aufgebracht wird.

3. Verfahren nach Anspruch 2, **dadurch gekennzeichnet, dass** durch Betätigung eines Fahrpedals des Fahrzeuges ein Anfahr- oder Rangierwunsch erkannt wird, und dass durch die Anfahrkupplung das erforderliche Anfahrmoment aufgebracht wird, welches zumindest geringfügig kleiner als das aufgebrachte Bremsmoment gewählt wird.

4. Verfahren nach einem der vorangehenden Ansprüche, **dadurch gek ennzeichnet, dass** das Bremsmoment der Getriebebremse im Stillstand des Fahrzeuges größer als das Anfahrmoment der Anfahrkupplung gewählt wird.

5. Verfahren nach einem der vorangehenden Ansprüche, **dadurch gek ennzeichnet, dass** das Anfahrmoment in Abhängigkeit von dem Anfahrwiderstand des Fahrzeuges bestimmt wird.

6. Verfahren nach einem der Ansprüche 3 bis 5, **dadurch gekennzei chnet, dass** das Bremsmoment der Getriebebremse während des Anfahr- oder Rangiervorganges in Abhängigkeit des Fahrerwunsches reduziert wird, um das Fahrzeug in Fahrtrichtung zu bewegen.

7. Verfahren nach einem der vorangehenden Ansprüche, **dadurch gek ennzeichnet, dass** die Getriebebremse an einer Vorgelegewelle oder an einer Getriebeeingangswelle angeordnet wird.

## Claims

1. Method for performing open-loop and/or closed-loop control of a starting process or manoeuvring process in an automatic transmission of a vehicle, in which a necessary starting torque is applied by a starting clutch, and a necessary braking torque is applied by a braking device, **characterized in that** the braking torque is applied at least partially by at least one transmission brake during the starting process or manoeuvring process.

2. Method according to Claim 1, **characterized in that**, after the release of a service brake of the vehicle, the necessary braking torque is applied completely by the transmission brake when the starting process or manoeuvring process is activated.

3. Method according to Claim 2, **characterized in that** a starting request or manoeuvring request is detected as a result of activation of an accelerator pedal of the vehicle, and **in that** the necessary starting torque, which is selected to be at least slightly smaller than the applied braking torque, is applied by the starting clutch.

4. Method according to one of the preceding claims, **characterized in that** the braking torque of the transmission brake in the stationary state of the vehicle is selected to be greater than the starting torque of the starting clutch.

5. Method according to one of the preceding claims, **characterized in that** the starting torque is determined as a function of the starting resistance of the vehicle.

6. Method according to one of Claims 3 to 5, **characterized in that** the braking torque of the transmission brake during the starting process or manoeuvring process is reduced as a function of the driver's request, in order to move the vehicle in the direction of travel.

7. Method according to one of the preceding claims, **characterized in that** the transmission brake is arranged on a layshaft or on a transmission input shaft.

## Revendications

1. Procédé de commande et/ou de régulation d'une opération de démarrage ou de manoeuvre sur une transmission automatique de véhicule, dans lequel le couple nécessaire pour le démarrage est appliqué par un embrayage de démarrage et le couple nécessaire pour le freinage est appliqué par un dispositif de freinage, **caractérisé en ce que**
le couple de freinage appliqué lors de l'opération de démarrage ou de manoeuvre est appliqué au moins en partie par au moins un frein de transmission.

2. Procédé selon la revendication 1, **caractérisé en ce qu'**après la libération d'un frein de service du véhicule, le couple de freinage nécessaire lorsque l'opération de démarrage ou de manoeuvre est activée est appliqué entièrement par le frein de transmission.

3. Procédé selon la revendication 2, **caractérisé en ce qu'**un souhait de démarrage ou de manoeuvre est détecté par l'actionnement de la pédale d'accélérateur du véhicule et **en ce que** l'embrayage de démarrage applique le couple de démarrage nécessaire, sélectionné à une valeur au moins légèrement inférieure à celle du couple de freinage appliqué.

4. Procédé selon l'une des revendications précédentes, **caractérisé en ce que** lorsque le véhicule est à l'arrêt, le couple de freinage du frein de transmission est sélectionné à une valeur supérieure à celle du couple de démarrage de l'embrayage de démarrage.

5. Procédé selon l'une des revendications précédentes, **caractérisé en ce que** le couple de démarrage est défini en fonction de la résistance du véhicule au démarrage.

6. Procédé selon l'une des revendications 3 à 5, **caractérisé en ce que** le couple de freinage du frein de transmission est réduit pendant l'opération de démarrage ou de manoeuvre en fonction du souhait du conducteur, pour déplacer le véhicule dans la direction de déplacement.

7. Procédé selon l'une des revendications précédentes, **caractérisé en ce que** le frein de transmission est disposé sur un arbre amont ou sur un arbre d'entrée de la transmission.
